# EUROPEAN PATENT SPECIFICATION

(11) **EP 2 236 222 B1**
(45) Date of publication and mention of the grant of the patent: **02.01.2013**
(21) Application number: 09174880.6
(22) Date of filing: 03.11.2009
(51) Int. Cl.: B08B 3/02, B05B 15/00, H04N 7/18

(54) **An apparatus for cleaning a vehicle's evaporator coil**
Vorrichtung zur Reinigung der Verdampferschlange eines Fahrzeugs
Appareil pour nettoyer une bobine d'évaporateur de véhicule

(30) Priority: 04.11.2008 TH 131708
(43) Date of publication of application: 06.10.2010
(73) Proprietor: Suriyapornpun, Chaiya, 10310 Bangkok (TH)
(72) Inventor: Suriyapornpun, Chaiya, 10310 Bangkok (TH)
(74) Representative: Intès, Didier Gérard André

(56) References cited:
- DE-A1- 19 601 253
- JP-A- 6 323 094

## Description

### Technical Field .

The present invention relates generally to an apparatus for cleaning a vehicle's evaporator coil.

### Background

Attempts of cleaning a vehicle's evaporator coil by providing a means for applying cleaners to the surface of evaporator coils are known in the prior art. At present, for cleaning a vehicle's evaporator coil, the serviceman will mix the cleaner with water in a gallon pump sprayer, and then spray the diluted fluid onto the surface that needs to be cleaned. Several problems exist with the present cleaning process as prescribed such as the accurate amount of the active ingredient and water to be combined. Servicemen habitually generate "diluted" cleaners that are either too dilute or too concentrated. Thus, the efficiency of the concentrated cleaners varies depending on the skills of the servicemen and the time available for the cleaning process. It is also not uncommon for a serviceman to accidentally damage the evaporator coil during such cleaning process. Furthermore, after the cleaning process, the cleaners left inside the evaporator coil or on the related components can cause corrosion and rust. These deficiencies are difficult to discover with the existing cleaning process and, when later discovered, can incur significant costs and time to the service provider and their customers.

Developments addressing the aforementioned deficiencies, in the recent past, have focused on the cleaners and cleaning compositions.

DE 196 01 253 discloses such a cleaner equipped with a camera.

The object of the present invention is to solve the above described problems by providing an apparatus for cleaning a vehicle's evaporator coil.

### Disclosure of Invention

The invention relates to an apparatus for cleaning a vehicle's evaporator coil according to appended claim 1, the apparatus comprising a sprayer for manually dispensing fluid, a fluid container containing the fluid to be dispensed; a casing having means forming an inlet passage connecting a cavity to the fluid container and means forming an outlet passage connecting said cavity to the sprayer; characterized in that a camera is attached to the sprayer, whereby an image captured by the said camera is transmitted by a transmitter to a receiver and is displayed at an output device.

The apparatus according to the invention is intended to allow for efficient cleaning of the evaporator coil. This can be achieved by observing the characteristics of the evaporator coil based on the images captured by the camera thereby allowing the serviceman to spray the diluted fluid onto the surface that is required to be cleaned.

Preferably, the output device is a monitor which can be detached from the apparatus and the transmission of capture images can be achieved via a transmission cable which is attached to the tube.

Preferably, the sprayer has a valve for controlling the amount and direction of the fluid to be sprayed.

The said apparatus comprises of a suction instrument which allows the removal of the residual fluid out of the evaporator coil and its related components.

Thus, the serviceman can accurately target the surfaces required to be cleaned and can prevent any damages to the evaporator coil and its related components that may otherwise occur during the cleaning process. The apparatus of this invention provides for a more efficient approach to cleaning the evaporator coil and to the removal of excess fluid from the cleaning because it allows a serviceman to control the sprayer and the suction unit based on the visual appearance of the evaporator coil.

For a better understanding of the preferred embodiment and to show how it may be performed, it will now be described in more detail by way of example only, with reference to the accompanying drawings.

### Brief Description of the Drawings

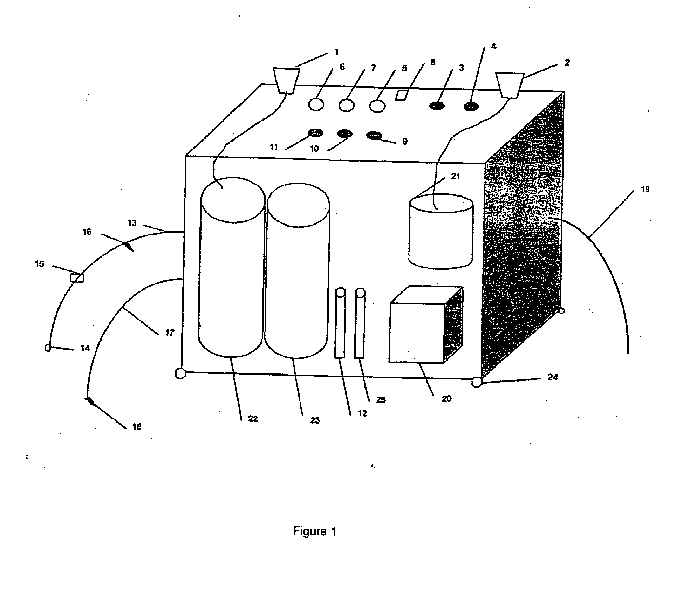

Fig. 1 is a sectional perspective view of the preferred embodiment.
Fig. 2 shows the preferred embodiment ready for cleaning a vehicle's evaporator coil.

### Detailed Description of Preferred Embodiment

The apparatus for cleaning a vehicle's evaporator coil comprises of a pump 20, a sprayer 14; and fluid containers 21, 22, and 23 containing cleaners, water, and residual respectively, the containers 21, 22 being connected to a cavity (not shown) where the cleaners are mixed with water. The sprayer and fluid containers are connected with a water and cleaner tube 13 for providing fluid transfer, wherein a camera 26 is attached to the sprayer 14. The pump 20 and the containers are contained in a casing with having inlets 1 and 2 and outlets for transfer of water and cleaners to the containers. The LED status indicators 3, 4 on the rear panel show the status of the pump 20. The gauges 5, 6, and 7 also on the rear panel demonstrate the levels of the cleaners, pressure, and water respectively. The on and off switch 8, the controllers 9 and 10 for controlling the amounts of cleaners and of water, and the suction controller 11 are on the top part of the casing. The output device is a monitor 28 which can be detached from the apparatus or, more precisely, from its casing, and the transmission of captured images can be carried out via a transmission cable 27 attached to the tube 13 via a fastener 15. The sprayer 14 has a valve 16 for controlling the amount and direction of the fluid to be sprayed. The suction instrument for allowing the removal of the residual fluid out of the evaporator coil and its related components is attached to the sprayer 14.

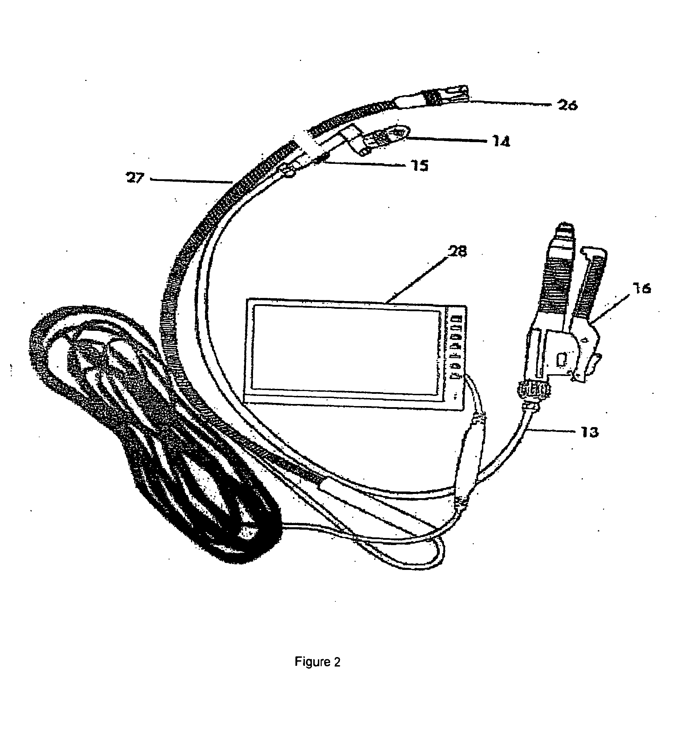

The arrangement of the apparatus in a ready position for cleaning a vehicle's evaporator coil is illustrated in Figure 2, where it can be seen that the monitor 28 is attached to the communication cable 27. The communication cable 27 is attached along the tube13 which has its one end connecting to the sprayer 14 and the other end connecting to the outlets of the casing. In the normal operation, the serviceman can observe the visual appearance of the surface of the evaporator coil and control the position of the sprayer 14 at the same time as the camera 26 and the communication cable 27 are attached to the sprayer 14 and the tube 13. Upon examination of the surface of the evaporator coil, the serviceman can spray the cleaners and subsequently spray the water to clean the required surface. The residual fluid can be removed by using the suction unit 19. The serviceman can control the level of the residual fluid removed as contained in the container 23 and shown in the gauge 25 to be the same as the amount of fluid as input for cleaning the evaporator coil indicated by the gauge 12. Thereafter, the air can be blown through the air tube 17 to a blowing nozzle 18, in order to make the evaporator dried.

## Claims

1. An apparatus for cleaning a vehicle's evaporator coil, the apparatus comprising:
A sprayer (14) for manually dispensing fluid;
A fluid container (21,22) containing the fluid to be dispensed, a housing having means forming an inlet passage connecting a cavity to the fluid container and means (13) forming an outlet passage connecting said cavity and the sprayer (14);
a camera (26) attached to the sprayer (14), whereby an image captured by the said camera is transmitted by a transmitter to a receiver and is displayed at an output device (28);
**characterized by** further comprising a suction instrument (19).

2. An apparatus as claimed in Claim 1, in which the means forming an outlet passage is a fluid tube (13).

3. An apparatus as claimed in Claim 1 or 2, in which the output device is a detachable monitoring device (28).

4. An apparatus as claimed in any one of Claims 1 to 3, in which the transmitter sends an image to the receiver via a communication cable (27).

5. An apparatus as claimed in Claim 4, in which the communication cable (27) is attached to the fluid tube (13).

6. An apparatus as claimed in any one of Claims 1 to 5, in which the said apparatus further comprises of a pressure pump (20) and a corresponding valve (16) for controlling the pressure of the dispensing fluid.

## Patentansprüche

1. Vorrichtung zum Reinigen einer Verdampferschlange eines Fahrzeuges, wobei die Vorrichtung umfaßt:
eine Sprühvorrichtung (14) zum manuellen Abgeben einer Flüssigkeit,
einen Flüssigkeitsbehälter (21, 22), der die abzugebende Flüssigkeit enthält, ein Gehäuse, das Mittel zum Bilden einer Ansaugöffnung, die einen Hohlraum mit dem Flüssigkeitsbehälter verbindet, und Mittel (13) zum Bilden einer Auslaßöffnung, die den Hohlraum und die Sprühvorrichtung (14) verbindet, aufweist,
eine Kamera (26), die an der Sprühvorrichtung (14) befestigt ist, wodurch ein durch die Kamera aufgenommenes Bild mittels eines Transmitters an einen Empfänger übertragen wird und an einer Ausgabevorrichtung (28) angezeigt wird,
**dadurch gekennzeichnet, daß** sie ferner einen Saugapparat (19) umfaßt.

2. Vorrichtung nach Anspruch 1, wobei die Mittel zum Bilden einer Auslaßöffnung ein Flüssigkeitsrohr (13) darstellen.

3. Vorrichtung nach Anspruch 1 oder 2, wobei die Ausgabevorrichtung eine abnehmbare Überwachungsvorrichtung (28) ist.

4. Vorrichtung nach einem der Ansprüche 1 bis 3, wobei der Transmitter ein Bild an den Empfänger mittels eines Kommunikationskabels (27) sendet.

5. Vorrichtung nach Anspruch 4, wobei das Kommunikationskabel (27) an dem Flüssigkeitsrohr (13) befestigt ist.

6. Vorrichtung nach einem der Ansprüche 1 bis 5, wobei die Vorrichtung ferner eine Druckpumpe (20) und ein entsprechendes Ventil (16) zum Kontrollieren des Druckes der abgegebenen Flüssigkeit umfaßt.

## Revendications

1. Appareil pour nettoyer un serpentin évaporateur d'un véhicule, l'appareil comprenant :
un pulvérisateur (14) pour distribuer manuellement un fluide ;
un récipient de fluide (21, 22) contenant le fluide à distribuer, un boîtier ayant des moyens formant un passage d'entrée raccordant une cavité au récipient de fluide et des moyens (13) formant un passage de sortie raccordant ladite cavité et le pulvérisateur (14) ;
une caméra (26) fixée au pulvérisateur (14), moyennant quoi une image prise par ladite caméra est transmise par un émetteur à un récepteur et est affichée sur un dispositif de sortie (28) ;
**caractérisé en ce qu'**il comprend en outre un instrument d'aspiration (19).

2. Appareil selon la revendication 1, dans lequel les moyens formant un passage de sortie sont un tube de fluide (13).

3. Appareil selon la revendication 1 ou 2, dans lequel le dispositif de sortie est un dispositif de surveillance détachable (28).

4. Appareil selon l'une quelconque des revendications 1 à 3, dans lequel l'émetteur envoie une image au récepteur via un câble de communication (27).

5. Appareil selon la revendication 4, dans lequel le câble de communication (27) est fixé au tube de fluide (13).

6. Appareil selon l'une quelconque des revendications 1 à 5, dans lequel ledit appareil comprend en outre une pompe de pressurisation (20) et une soupape (16) correspondante pour contrôler la pression du fluide de distribution.
